# EUROPÄISCHE PATENTSCHRIFT

(11) **EP 1 825 335 B1**
(45) Veröffentlichungstag und Bekanntmachung des Hinweises auf die Patenterteilung: **08.07.2009**
(21) Anmeldenummer: 05822766.1
(22) Anmeldetag: 15.12.2005
(51) Int. Cl.: G03H 1/22

(54) **VORRICHTUNG ZUM BETRACHTEN EINES HOLOGRAMMS AN SICH UND SEINER REKONSTRUKTION**
DEVICE FOR VIEWING A HOLOGRAM AND RECONSTRUCTION OF SAID HOLOGRAM
DISPOSITIF POUR REGARDER UN HOLOGRAMME ET POUR LE RECONSTITUER

(30) Priorität: 15.12.2004 DE 4019513
(43) Veröffentlichungstag der Anmeldung: 29.08.2007
(73) Patentinhaber: tesa scribos GmbH, 69126 Heidelberg (DE)
(72) Erfinder: DIETRICH, Christoph, 69126 Heidelberg (DE); SCHEIBENSTOCK, Steffen, 70178 Stuttgart (DE)
(74) Vertreter: Cohausz & Florack
(86) Internationale Anmeldenummer: PCT/EP2005/013472
(87) Internationale Veröffentlichungsnummer: WO 2006/063824

(56) Entgegenhaltungen:
- EP-A- 1 041 457
- GB-A- 2 248 943
- US-A- 4 208 086
- US-A- 5 798 864
- US-A- 6 052 540

## Beschreibung

Die vorliegende Erfindung betrifft eine Vorrichtung zum Auslesen eines Hologramms, insbesondere eines computergenerierten Fouriertransformationshologramms, mit einer Strahlungsquelle zum Bestrahlen des Hologramms mit einem Auslesestrahl aus elektromagnetischer Strahlung, mit einer Austrittsöffnung zum Aufnehmen eines von dem Hologramm erzeugten Bildes und mit einem Halteabschnitt zum Halten der Vorrichtung mit einer Hand, wobei die Vorrichtung zum Aufsetzen auf ein das Hologramm tragendes Speichermedium ausgebildet ist, wobei eine mindestens zwei Linsen aufweisende Optik vorgesehen ist und wobei die mindestens zwei Linsen aufweisende Optik derart ausgebildet ist, dass eine erste Linse zwischen dem Hologramm und der Austrittsöffnung sowie eine zweite Linse zwischen der ersten Linse und der Austrittsöffnung vorgesehen ist.

Allgemein sind aus dem Stand der Technik Lesegeräte für Hologramme vielfältig bekannt. Viele der Lesegeräte beziehen sich auf konventionell belichtete Hologramme, einige beschäftigen sich jedoch auch mit computergenerierten Hologrammen (CGH).

Computergenerierte Hologramme, insbesondere digitale Hologramme, sind zweidimensionale Punktmatrizen bevorzugt mit sehr geringen Abmessungen, die aus einzelnen Punkten mit unterschiedlichen optischen Eigenschaften bestehen.

Durch Beleuchtung eines computergenerierten Hologramms bspw. mit einer kohärenten elektromagnetischen Welle, insbesondere Lichtwelle werden durch Beugung in Transmission oder Reflexion Bilder und/oder Daten reproduziert. Die unterschiedlichen optischen Eigenschaften der einzelnen Punkte können Reflexionseigenschaften beispielsweise durch Oberflächentopographie, variierende optische Weglängen im

Material des Speichermediums (Brechungsindizes) oder Farbwerte des Materials sein.

Im Gegensatz zu herkömmlichen Hologrammen werden die Beugungsstrukturen in der Hologrammebene nicht konventionell belichtet, sondern unter Verwendung von Algorithmen von Computern berechnet und punktweise in das Material des Speichermediums eingebracht. Es handelt sich somit um sogenannte computergenerierte Hologramme (CGH). Diese können zum Kennzeichnen, Identifizieren und Individualisieren beliebiger Gegenstände eingesetzt werden. Dabei finden sie vermehrt in sicherheitsrelevanten Bereichen Anwendung.

Die zuvor erläuterten computergenerierten Hologramme können unterschiedliche Informationen tragen. Zum einen kann das Hologramm eine holographische Information tragen, die beim Auslesen, also bei der Reproduktion eine direkt lesbare Information (Schrift, Bild, Graphik) wiedergibt. Ebenso kann die ausgelesene Information verschlüsselt, insbesondere digitalisiert sein. Dann enthält das reproduzierte Hologramm beispielsweise eine digitale Matrix ähnlich einem ein- oder zweidimensionalen Barcode.

Zusätzlich kann die Punkteverteilung des computergenerierten Hologramms an sich eine direkt lesbare Information mit sehr kleinen Abmessungen aufweisen, beispielsweise eine Mikroschrift oder eine Mikroabbildung. Zum Erkennen ist eine Vergrößerung der direkt lesbaren Information notwendig, also ein vom Auslesen des Hologramms verschiedener Vorgang. Die Mikroschrift und/oder die Mikroabbildung selbst kann wiederum verschlüsselt sein. Beispielsweise kann eine Mikroabbildung selbst eine digitale Information eines ein- oder zweidimensionalen Barcodes darstellen. Es ist also möglich, bei den auszulesenden Hologrammen holographische und direkt lesbare Information zu kombinieren.

Speziell bei Fouriertransformationshologrammen, seien es konventionell belichtete oder computergenerierte Hologramme, besteht das Problem, dass es zur Rekonstruktion der gespeicherten Information einer Transformationslinse bedarf. Diese ist im klassischen Fall im Strahlengang hinter dem Hologramm im Abstand ihrer positiven Brennweite zum Hologramm aufgestellt. Das rekonstruierte Bild ist dann scharf in der hinteren Brennebene der Linse zu beobachten. Alternativ lässt sich auch die Transformationslinse in direktem Kontakt zur Hologrammebene oder sogar vor dem Hologramm positionieren. Das rekonstruierte Bild ist wieder in der hinteren Brennebene der Transformationslinse scharf zu beobachten.

Alternativ ist es auch möglich die Rekonstruktion auf einen Schirm zu werfen, der vergleichsweise weit entfernt positioniert ist. Dies hängt mit der Tatsache zusammen, dass das Fernfeldbeugungsmuster einer Fouriertransformation entspricht. Diese Möglichkeit ist jedoch mit geringerer Schärfe, geringerer Helligkeit und oft zu großen Abmessungen des Bildes verbunden und aus diesen Gründen nicht bevorzugt.

Die Projektion einer Rekonstruktion eines Hologramms auf einen Schirm eines Handsesegeräts unter Verwendung eines von einer Strahlungsquelle erzeugten Auslesestrahls ist beispielsweise aus der EP 1 041 457 A2 bekannt.

Auch bekannt ist es, alternativ zu einem Schirm für die Rekonstruktion einen CCD-Detektor (Charged Coupled Device) zu verwenden. Derartige Lösungen sind allerdings kostenintensiv und aufwändig. Bezüglich des derartige bekannte Vorrichtungen zeigenden Standes der Technik wird beispielsweise auf die DE 42 37 415, die EP 0 802 462 oder die US 5,623,347 verwiesen.

Aus der WO 02/084588 ist es zur Vereinfachung eines Lesegeräts zum Auslesen von Hologrammen bekannt, das menschliche Auge selbst als Fouriertransformationslinse einzusetzen. Auf diese Weise können Vorrichtungen zum Auslesen von Hologrammen erheblich vereinfacht werden.

Obgleich sich die bekannte Vorrichtung grundsätzlich bewährt hat, ist es zur Vermeidung einer Einschränkung des Sichtfelds erforderlich, das Auge sehr nahe an das auszulesende Hologramm heranzubringen. So beträgt beispielsweise bei einem Hologramm-Rasterabstand von 1,6 µm und einer Auslesewellenlänge von beispielsweise 658 nm der Beugungswinkel des Auslesestrahls 12°. Bei einem angenommenen Pupillendurchmesser von ca. 5 mm müsste man mit dem Auge also auf einen Abstand von ca. 2 cm an das Hologramm herantreten, um nicht das Sichtfeld einzuschränken. Dies kann insbesondere bei Hologrammen auf größeren Gegenständen unkomfortabel sein. Auch ist die Rekonstruktion von besonders kleinen Hologrammen oftmals unkomfortabel.

Mit anderen Worten, der Winkelbereich, unter dem man die Rekonstruktion betrachten kann, kann nicht beeinflusst werden. Ein Betrachter kann also die Augen nicht frei bewegen, um die Rekonstruktion in verschiedenen Blickrichtungen betrachten zu können. Das Sichtfeld ist also eingeschränkt.

Hinzu kommt, dass es manchmal erwünscht ist, eine Anpassung des Lesegeräts an eine individuell vorliegende Sehschärfe des Benutzers der Vorrichtung vorzunehmen, ähnlich wie bei einem Fernglas oder bei einem Mikroskop.

Eine Auslesevorrichtung gemäss dem Oberbegriff von Anspruch 1 ist in der GB 2 248 943 A beschrieben. Diese Auslesevorrichtung ermöglicht das automatische Evaluieren von im Hologramm gespeicherter Information.

Ausgehend von dem erläuterten Stand der Technik liegt der Erfindung das technische Problem zugrunde, eine Vorrichtung zum Auslesen eines Hologramms der eingangs genannten Art bereitzustellen, die das Auslesen von Hologrammen für den Betrachter in komfortabler Weise mit einem einfachen und kleinen Aufbau ermöglicht.

Dieses technische Problem wird erfindungsgemäß durch eine Vorrichtung zum Auslesen eines Hologramms, insbesondere eines computergenerierten Fouriertransformationshologramms, mit einer Strahlungsquelle zum Bestrahlen des Hologramms mit einem Auslesestrahl aus elektromagnetischer Strahlung, mit einer Austrittsöffnung zum Aufnehmen eines von dem Hologramm erzeugten Bildes und mit einem Halteabschnitt zum Halten der Vorrichtung mit einer Hand, wobei die Vorrichtung zum Aufsetzen auf ein das Hologramm tragendes Speichermedium ausgebildet ist und wobei eine mindestens zwei Linsen aufweisende Optik vorgesehen ist, wobei die mindestens zwei Linsen aufweisende Optik derart ausgebildet ist, dass eine erste Linse zwischen dem Hologramm und der Austrittsöffnung sowie eine zweite Linse zwischen der ersten Linse und der Austrittsöffnung vorgesehen istdadurch gelöst, dass die mindestens zwei Linsen aufweisende Optik zur Abbildung einer Rekonstruktion des Hologramms auf der Netzhaut durch das menschliche Auge als Fouriertransformationslinse ausgebildet ist und dass jeweils ein Brennpunkt der ersten Linse und ein Brennpunkt der zweiten Linse im Wesentlichen in einer Ebene angeordnet sind.

Die beschriebene Optik ermöglicht also eine Überführung eines auf einer Seite der Optik einfallenden parallelen Strahlenbündels in ein auf der anderen Seite der Optik herauskommendes im Wesentlichen paralleles Strahlenbündel. Dabei wird von einer "im Wesentlichen" Übereinstimmung deshalb gesprochen, weil mit einer geringen Positionsvariation eine Sehschärfeneinstellung erfolgen kann. Die Strahlgeometrie kann also etwas von der idealen Paralellität abweichen. Dieses wird weiter unten näher erläutert.

Ziel des beschriebenen Aufbaus ist die Anpassung des Winkelbereiches des Sichtfeldes zur Beobachtung mit dem menschlichen Auge. Man kann dabei auch von einer Ninkeltransformation sprechen. Mit der Optik ist daher ein im Vergleich zur direkten Betrachtung der Rekonstruktion des Hologramms relativ großer Abstand des Auges zum Hologramm möglich. Es ist also zur Vermeidung einer Einschränkung des Sichtfelds nicht mehr erforderlich, das Auge physisch sehr nahe an das auszulesende Hologramm heranzubringen. Der Komfort und die Variabilität sind durch die Vorrichtung also gegenüber bekannten Lesevorrichtung erhöht, wobei gleichzeitig ein einfacher Aufbau vorliegt.

Die Vorrichtung zum Auslesen eines Hologramms, insbesondere eines computergenerierten Hologramms, weist eine Strahlungsquelle zum Bestrahlen des Hologramms mit einem Auslesestrahl aus elektromagnetischer Strahlung auf. Der Auslesestrahl dient zur Rekonstruktion des Hologramms durch Beugung. Dabei kann der Auslesestrahl das Hologramm sowohl in Reflexion als auch in Transmission bestrahlen.

Weiterhin ist eine Austrittsöffnung zum Aufnehmen eines von dem Hologramm erzeugten Bildes vorgesehen. Das menschliche Auge nimmt das von dem Hologramm erzeugte Bild an der Austrittsöffnung auf.

Es gibt verschiedene Varianten der Ausgestaltung der Optik, die im Wesentlichen gleichberechtigt nebeneinander stehen. So können beide Linsen konvex sein. Ebenso ist es möglich, dass eine der Linsen konvex und die andere der Linsen konkav ist. Die Brennweiten beider Linsen können gleich groß oder unterschiedlich groß sein, wenn beide Linsen konvex sind. Ist eine der Linsen konkav, so sind beide Brennweiten unterschiedlich zueinander.

Das Hologramm ist in Strahlrichtung betrachtet vor der Optik angeordnet. Das Hologramm kann in Reflektion oder Transmission betrachtet werden.

Beim Aufbau der Optik sind dazu mindestens eine zwischen dem Hologramm und der Austrittsöffnung angeordnete erste Linse und mindestens eine zwischen der ersten Linse und der Austrittsöffnung liegende zweite Linse vorgesehen. Beide Linsen sind in einem Abstand angeordnet, der im Wesentlichen der Summe der Brennweiten der beiden Linsen entspricht. Beide Linsen ermöglichen zusätzlich zum Überführen der Rekonstruktion das Abbilden der Punkteverteilung des Hologramms für eine Betrachtung der Punkteverteilung an sich. Dazu wird die Bildebene mittels der Optik an den Ort der Pupille oder sogar - in Strahlrichtung betrachtet - hinter die Pupille verschoben, wodurch sich der Betrachtungskomfort für einen Benutzer auch bei der Betrachtung des Hologramms selber verbessert wird.

Zuvor ist der Aufbau der Optik mit Hilfe von zwei Linsen beschrieben worden. Daher sei hier hervorgehoben, dass anstelle von jeder Linse auch eine Mehrzahl von Linsen als Linsensystem angeordnet sein kann. Die Erfindung ist daher nicht auf die Anordnung von zwei einzelnen Linsen beschränkt.

Die Linsen können in besonders einfacher Weise gleiche Brennweiten besitzen. Jedoch ist mit einer individuellen Anpassung der Brennweiten die Größe der Rekonstruktion einstellbar.

Da das Hologramm in Strahlrichtung betrachtet vor den beiden Linsen angeordnet ist, kann über das Brennweitenverhältnis der beiden Linsen festgelegt werden, ob die Rekonstruktion verkleinert oder vergrößert wird. Umgekehrt gilt dieses auch für die Abbildung der Punkteverteilung des Hologramms. Es kann auch anstelle einer der beiden Linsen eine Zoomoptik vorgesehen sein, um die Vergrößerung der Rekonstruktion des Hologramms einstellen zu können.

Bei einer von der Erfindung nicht umfassten Anordnung des Hologramms zwischen den beiden Linsen würde der Grad der Vergrößerung durch den Abstand des Hologramms zum gemeinsamen Brennpunkt und durch die Brennweite der zweiten Linse bestimmbar sein.

Bei einer weiteren bevorzugten Ausführungsform der vorliegenden Erfindung ist die erste Linse und/oder die zweite Linse entlang des Strahlengangs axial verschiebbar angeordnet. Dadurch ist es in vorteilhafter Weise möglich, die Schärfe der Rekonstruktion im Auge des Beobachters anzupassen, was insbesondere für Benutzer mit unterschiedlichen Sehschärfen von Vorteil ist. Es ist also Trägern einer Sehhilfe möglich, die Vorrichtung mit oder ohne Sehhilfe zu verwenden. Auf diese Weise ist der Komfort der Vorrichtung weiter erhöht.

Gemäß einer bevorzugten Ausgestaltung kann eine Einrichtung zum Bewegen einer der Linsen aus dem Strahlengang und in den Strahlengang vorgesehen sein. Das Bewegen der Linse kann in besonders einfacher Weise durch ein Schwenken erfolgen. Dazu kann eine entsprechende Schwenkeinrichtung für die Linse vorgesehen sein. Insbesondere kann die Einrichtung die zweite Linse aus dem Strahlengang und in den Strahlengang bewegen.

Bei einer aus dem Strahlengang entfernten Linse fungiert die verbleibende konvexe Linse als einfache Lupe. Auf diese Weise wird für den Benutzer der Vorrichtung die Oberfläche des Hologramms vergrößert sichtbar. Somit kann die Vorrichtung zum Auslesen in besonders einfacher Weise präzise so positioniert werden, dass der Auslesestrahl das zu rekonstruierende Hologramm bestrahlt und die Vorrichtung sich in einer für das Auslesen des Hologramms geeigneten Position befindet. Diese Ausgestaltung ist insbesondere bei kleinen Hologrammen vorteilhaft, oder wenn keine anderweitigen Positionierhilfen, beispielsweise Anschlagkanten vorgesehen sind. Dies ist insbesondere der Fall, wenn mit der Vorrichtung häufig wechselnde Hologramme ausgelesen werden sollen.

Auch kann bei aus dem Strahlengang entfernter Linse eine direkt lesbare Information, beispielsweise eine Mikroschrift oder ein Mikrobild ausgelesen werden.

Bei in den Strahlengang bewegter Linse kann das Hologramm dann rekonstruiert werden.

Es kann eine Beleuchtungseinrichtung zum Beleuchtet des Hologramms vorgesehen sein. Die Beleuchtungseinrichtung ist insbesondere zum Positionieren der Vorrichtung in Bezug auf das Hologramm oder auch zum Auslesen einer direkt lesbaren Information vorgesehen. Eine derartige Beleuchtungseinrichtung vereinfacht das Positionieren der Vorrichtung bzw. das Auslesen von direkt lesbarer Information.

Die Beleuchtungseinrichtung kann dabei mindestens eine Leuchtdiode aufweisen. Leuchtdioden sind besonders kostengünstig bereitzustellen und zeichnen sich bei guter Beleuchtungsleistung durch Langlebigkeit und einen geringen Wartungsaufwand aus.

Gemäß einer weiteren Ausgestaltung können die Einrichtung zum Bewegen einer der Linsen und die Beleuchtungseinrichtung miteinander gekoppelt sein. Eine solche Kopplung ermöglicht es in einfacher Weise, dass bei Betätigen der Einrichtung zum Bewegen der Linse bzw. der Beleuchtungseinrichtung die jeweils andere gekoppelte Einrichtung automatisch ebenfalls betätigt wird. Auf diese Weise kann beispielsweise in besonders einfacher Weise erreicht werden, dass bei aus dem Strahlengang entfernter Linse die Beleuchtungseinrichtung automatisch aktiviert wird, bzw. dass bei in den Strahlengang bewegter Linse die Beleuchtungseinrichtung automatisch deaktiviert wird. Selbstverständlich kann auch durch ein Betätigen der Beleuchtungseinrichtung die Einrichtung zum Bewegen der Linse automatisch betätigt werden. Der Komfort der Vorrichtung wird auf diese Weise erhöht.

Ebenso ist es möglich, dass die Einrichtung zum Bewegen einer der Linsen und die Strahlungsquelle miteinander gekoppelt sind. Auf diese Weise kann analog zu der beschriebenen Kopplung der Einrichtung zum Bewegen der Linse mit der Beleuchtungseinrichtung besonders einfach erreicht werden, dass der Auslesestrahl bei in den Strahlengang bewegter Linse aktiviert wird bzw. dass bei aus dem Strahlengang entfernter Linse der Auslesestrahl deaktiviert wird. Wiederum ist es natürlich auch denkbar, dass durch ein Betätigen der Strahlungsquelle die Einrichtung zum Bewegen der Linse automatisch betätigt wird. Der Komfort wird dadurch weiter erhöht.

Zum Aktivieren der jeweils gekoppelten Funktionen können beispielsweise getrennte Schalter oder ein gemeinsamer Schalter an der Vorrichtung vorgesehen sein.

Als besonders günstig bereitzustellender Auslesestrahl, der gleichzeitig eine hohe Kohärenz aufweist, kann als Auslesestrahl ein Laserstrahl vorgesehen sein. Insbesondere geeignet sind in dieser Hinsicht Diodenlaser. Sie zeichnen sich durch eine kompakte Bauweise und niedrige Anregungsströme aus. Außerdem sind die Diodenlaser kostengünstig erhältlich. Aber auch andere Lasertypen können eingesetzt werden. Lediglich beispielhaft werden hier noch Helium-Neon-Laser genannt.

Nach einer weiteren bevorzugten Lehre kann eine Abschattungseinrichtung, insbesondere eine Blende, zur Abschattung des direkt von dem Hologramm reflektierten bzw. transmittierten Auslesestrahls vorgesehen sein. Es wird also die 0. Ordnung des bei der Rekonstruktion entstehenden Beugungsbildes abgeschattet. Auf diese Weise wird verhindert, dass der Benutzer der Vorrichtung durch direkt von dem Hologramm reflektierte bzw. transmittierte Anteile des Auslesestrahls geblendet wird. Der Kontrast innerhalb der Rekonstruktion wird dadurch verbessert.

Für ein weiter verbessertes Auslesen des Hologramms kann die Austrittsöffnung eine Abschattungseinrichtung, insbesondere eine an das menschliche Auge angepasste Tülle, zur Abschattung von Störlicht aufweisen. Auf diese Weise wird verhindert, dass insbesondere seitlich einfallendes Umgebungslicht von dem Auge wahrgenommen wird. Eine kontrastreichere, deutlichere, schärfere und hellere Rekonstruktion des Hologramms auf der Netzhaut des Auges wird erreicht.

Gemäß einer besonders praxisgemäßen Ausgestaltung kann die Vorrichtung modulartig aufgebaut sein. Durch eine solche Ausgestaltung können insbesondere einzelne Teile der Vorrichtung in einfacher Weise ausgetauscht werden. Dies betrifft sämtliche verschleißrelevanten Teile, beispielsweise Teile der Beleuchtung oder auch die eingesetzten Linsen. Durch einen Austausch der Linsen können zudem die optischen Eigenschaften der Vorrichtung durch die Wahl von Linsen geeigneter Brennweite noch variabler an die auszulesenden Hologramme angepasst werden.

Nach einer weiteren Lehre kann mindestens eine Positioniereinrichtung zum Positionieren der Vorrichtung in Bezug auf das Hologramm vorgesehen sind. Als Positioniereinrichtungen kommen beispielsweise Führungsschienen, Klammern, Magneten, Kanten oder andere geeignete Einrichtungen in Frage. Derartige Positioniereinrichtungen ermöglichen ein schnelles, einfaches und präzises Positionieren der Vorrichtung für ein Auslesen des Hologramms.

Gemäß einer weiteren Ausgestaltung kann eine Einrichtung zum Einstellen der Größe der durch den Auslesestrahl bestrahlten Fläche des Hologramms vorgesehen sein. Auf diese Weise ist es möglich, den Auslesestrahl derart einzustellen, dass das Hologramm in jeweils gewünschter Weise, beispielsweise vollständig oder aber nur zum Teil ausgelesen wird.

Weiterhin kann eine Einrichtung zum Positionieren der durch den Auslesestrahl bestrahlten Fläche des Hologramms vorgesehen sein. Somit ist es möglich, den Auslesestrahl derart zu positionieren, dass nur ein jeweils gewünschter Bereich des Hologramms ausgelesen wird. Dies ist insbesondere bei der partiellen Ausleuchtung von Mehrfachhologrammen vorteilhaft.

Auch ist es denkbar, dass eine Einrichtung zum Einstellen der Strahlleistung des Auslesestrahls vorgesehen ist. So kann der Auslesestrahl optimal an die Eigenschaften des jeweils auszulesenden Hologramms angepasst werden.

Gemäß einer besonders praxisgemäßen Ausgestaltung kann das Hologramm in einem Speichermedium gespeichert sein. Als Speichermedium kommen grundsätzlich sämtliche bekannten Speichermedien in Frage.

Die Vorrichtung kann eine Einrichtung aufweisen, die eine automatische Abschaltung der Vorrichtung, insbesondere des Auslesestrahls und der Beleuchtungseinrichtung vornimmt, wenn die Vorrichtung über einen festgelegten Zeitraum nicht benutzt wurde. Durch eine solche sogenannte "Time-Out Funktion" können eine gegebenenfalls vorhandene Batterie sowie die eingesetzten Bauteile geschont werden.

Die Erfindung wird nachfolgend anhand einer ein Ausführungsbeispiel darstellenden Zeichnung erläutert. Es zeigen
- Fig. 1: eine erfindungsgemäße Vorrichtung in einer ersten perspektivischen Ansicht,
- Fig. 2: die in Fig. 1 dargestellte Vorrichtung in einer zweiten perspektivischen Ansicht,
- Fig. 3: den optischen Aufbau der in Fig. 1 dargestellten Vorrichtung in einer ersten Betriebsstellung,
- Fig. 4: den optischen Aufbau der in Fig. 1 dargestellten Vorrichtung in einer zweiten Betriebsstellung,
- Fig. 5: die Optik des menschlichen Auges mit ihrer Funktion als Fouriertransformationslinse und
- Fig. 6 bis 12: verschiedene Aufbauten einer Optik.

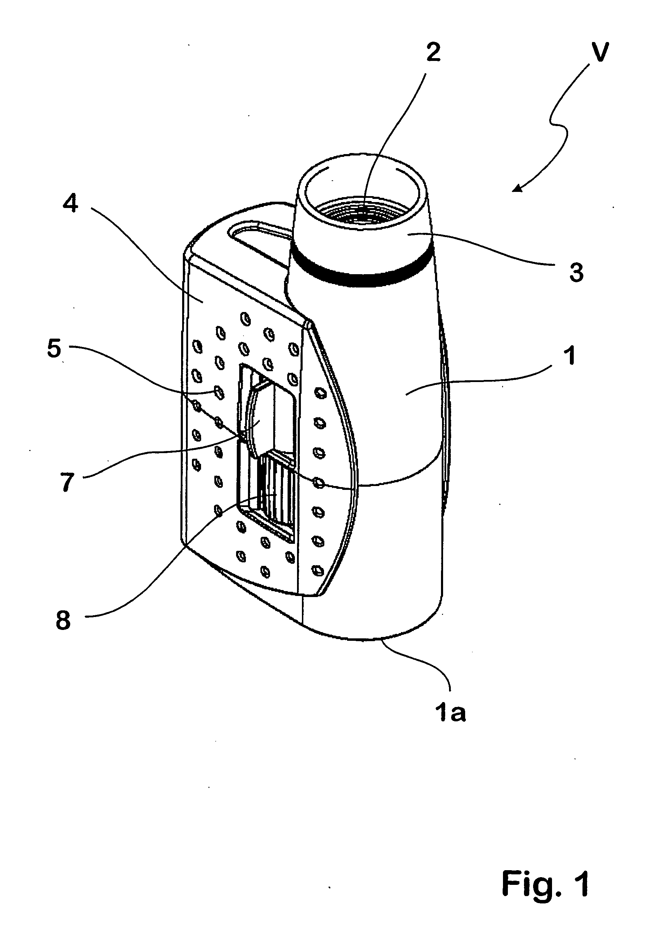

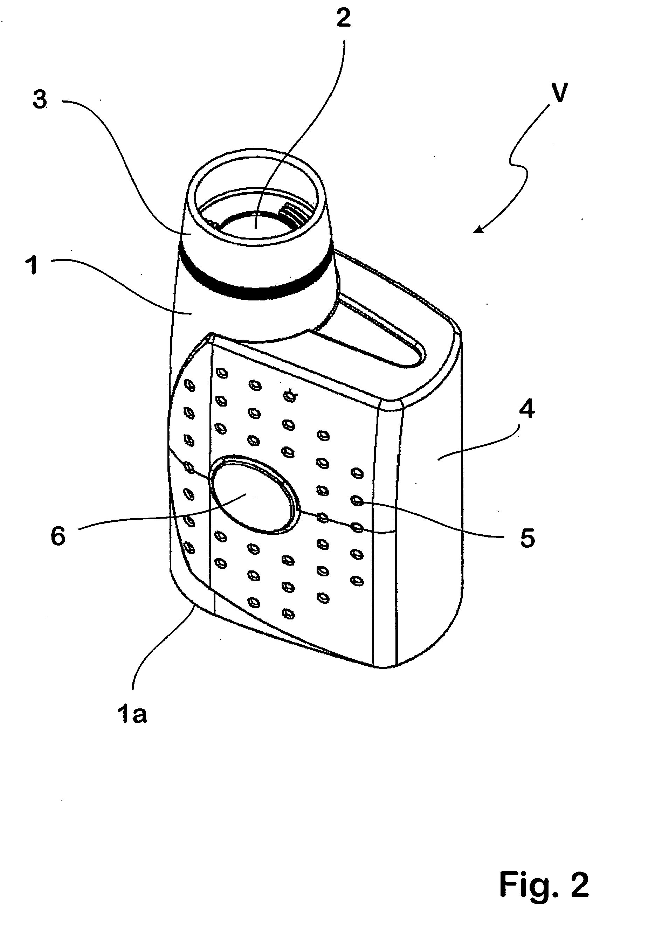

In den Fig. 1 und 2 ist eine Vorrichtung V zum Auslesen eines Hologramms dargestellt. Die Vorrichtung V weist eine im wesentlichen tubusförmige Aufnahme 1 auf, in der der optische Aufbau der Vorrichtung V enthalten ist. An dem einen Ende 1a der Aufnahme 1 kann die Vorrichtung V auf ein auszulesendes Hologramm bzw. auf ein das Hologramm tragendes Speichermedium aufgesetzt werden. An dem gegenüberliegenden Ende weist die Aufnahme 1 eine Austrittsöffnung 2 zum Aufnehmen eines von dem Hologramm erzeugten Bildes sowie eine Tülle 3 zum Abschatten von Störlicht auf. Zum Auslesen des Hologramms kann der Benutzer sein als Transformationslinse fungierendes Auge 14 auf die Tülle 3 aufsetzen.

Seitlich entlang ihrer Längsachse ist an der Aufnahme 1 ein Halteabschnitt 4 zum Halten der Vorrichtung V befestigt. Um den Halteabschnitt 4 besser mit einer Hand halten zu können, weist dieser beispielsweise eine nach Art einer Perforation ausgestaltete Oberflächenstruktur 5 auf.

In dem Halteabschnitt 4 ist in dem dargestellten Ausführungsbeispiel zum einen ein Laser, beispielsweise ein Diodenlaser, zum Bestrahlen des Hologramms angeordnet. Zum anderen ist zum Positionieren der Vorrichtung V in Bezug auf das Hologramm bzw. zum Auslesen von direkt lesbarer Information eine Leuchtdiode zur Beleuchtung des Hologramms vorgesehen. In dem Halteabschnitt 4 können außerdem die Elektronik, die weiter unten erläuterte Schwenkmechanik und eine oder mehrere Batterien zur Versorgung der Beleuchtungseinrichtung sowie des zur Rekonstruktion des Hologramms eingesetzten Lasers vorgesehen sein.

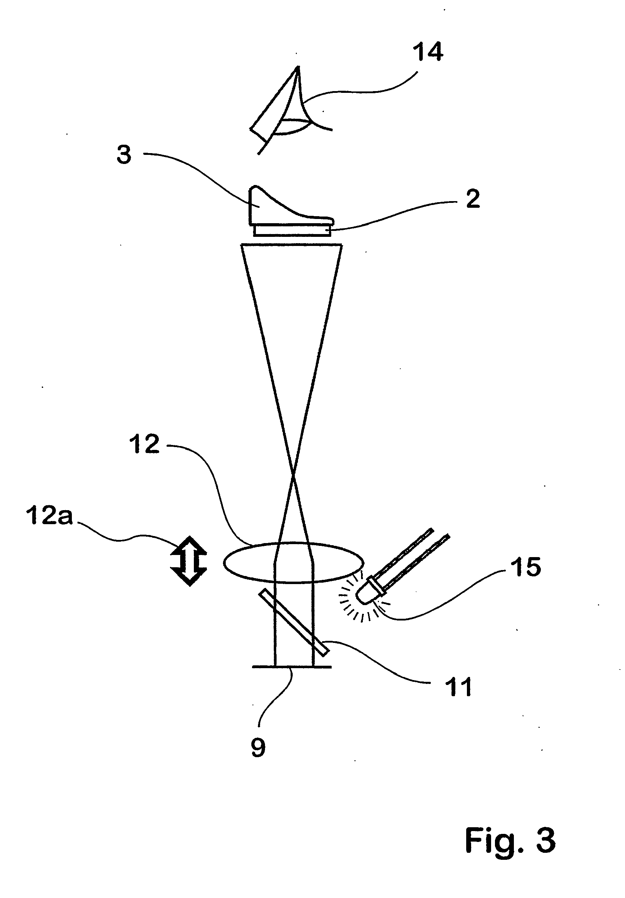

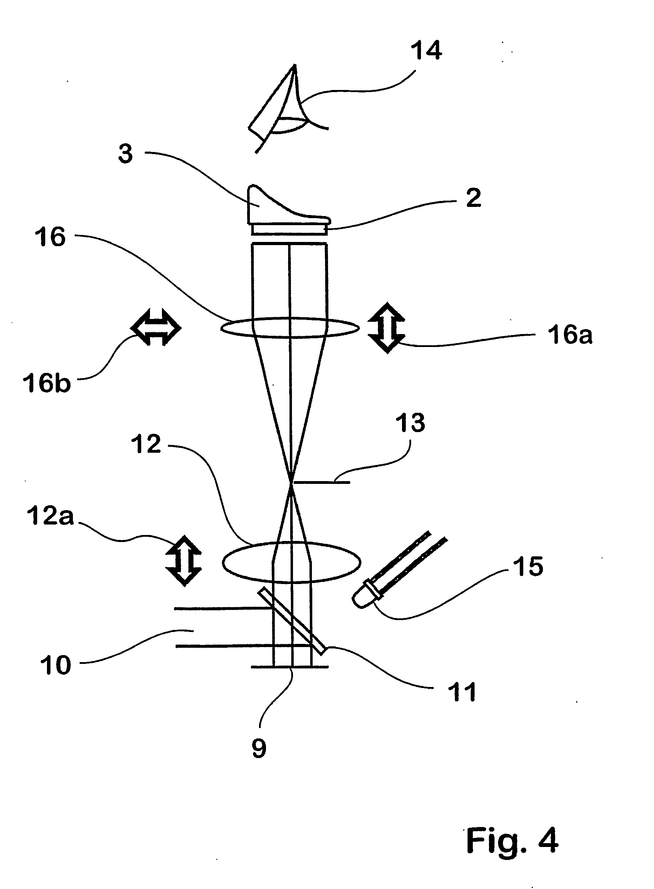

An der einen Seite des Halteabschnitts 4 ist ein Druckschalter 6 zum Ein- und Ausschalten der Vorrichtung V vorgesehen. An der gegenüberliegenden Seite des Halteabschnitts 4 sind ein Kippschalter 7 und ein Drehrad 8 vorgesehen. Der Kippschalter 7 dient zum Wechseln der Betriebsstellung der Vorrichtung V von einer Stellung zum Positionieren der Vorrichtung V in Bezug auf das auszulesende Hologramm bzw. zum Auslesen von direkt lesbarer Information in eine Stellung zum Rekonstruieren des Hologramms. In der ersten Stellung stellt die im Strahlengang verbleibende Linse 12 eine Lupe dar. Das Drehrad 8 dient zum Einstellen der Sehschärfe der auf der Netzhaut des menschlichen Auges 14 entstehenden Rekonstruktion des Hologramms. Die Funktion des Kippschalters 7 und des Drehrads 8 wird anhand der Fig. 3 und 4 verdeutlicht.

Der Schalter 6 zum Ein- und Ausschalten der Vorrichtung V sowie der Kippschalter 7 und das Drehrad 8 können beim Halten der Vorrichtung V mit einem Finger unter geringem Kraft- und Wegaufwand bedient werden. Die Vorrichtung V ist modulartig aufgebaut, so dass einzelne Bauteile problemlos und schnell ausgewechselt werden können.

In den Fig. 3 und 4 ist der optische Aufbau der Vorrichtung V schematisch in einer ersten und in einer zweiten Betriebsstellung dargestellt.

Fig. 3 zeigt die Betriebsstellung zum Positionieren der Vorrichtung V in Bezug auf ein auszulesendes Hologramm 9 bzw. zum Auslesen von direkt lesbarer Information. Bei dem Hologramm 9 handelt es sich um ein computergeneriertes Hologramm (CGH), das beispielsweise in einem Speichermedium gespeichert sein kann.

Die dargestellte Leuchtdiode 15 beleuchtet den Bereich des Hologramms 9 mit sichtbarem Licht. Das vom Hologramm 9 reflektierte Licht passiert eine in dem Strahlengang angeordnete bikonvexe Linse 12. Die Linse 12 ist axial entlang des Strahlengangs des optischen Aufbaus verschiebbar, wie schematisch durch den Doppelpfeil 12a angedeutet. Die Linse 12 erzeugt entsprechend ihrer Brennweite von dem bestrahlten Hologramm 9 ein virtuelles Bild, das durch die Austrittsöffnung 2 und durch die Tülle 3 der Vorrichtung V hindurch vom menschlichen Auge 14 beobachtet werden kann. Die Veränderung der Position der Linse 12 bewirkt unterschiedliche Vergrößerungen des Hologrammes selbst.

Die in Fig. 3 dargestellte Linse 12 dient in dem optischen Aufbau somit als einfache Lupe. Der Betrachter sieht mit seinem Auge 14 ein wie gewünscht vergrößertes Bild des auszulesenden Hologramms 9, also der eigentlichen Punkteverteilung im Fall eines computergenerierten Hologramms, und kann so die Vorrichtung V optimal in Bezug auf das auszulesende Hologramm 9 positionieren und/oder direkt lesbare Information auslesen. Aufgrund der modulartigen Bauweise der Vorrichtung V kann in einfacher Weise die Linse 12 durch eine Linse geeigneter anderer Brennweite ausgetauscht werden, um eine noch größere Variabilität der Vergrößerung zu erreichen.

Nachdem das Positionieren der Vorrichtung V bzw. das Auslesen von direkt lesbarer Information erfolgt ist, kann der Benutzer in die in Fig. 4 dargestellte Betriebsstellung wechseln. Dazu betätigt er den Kippschalter 7. Der Kippschalter 7 betätigt eine nicht dargestellte Einrichtung, in diesem Fall eine Schwenkeinrichtung, die eine zweite Linse 16 in den Strahlengang bewegt. Die Linse 16 war zuvor aus dem Strahlengang heraus in einen dafür vorgesehenen Freiraum des Halteabschnitts 4 geschwenkt worden. Diese Linse 16 ist ebenfalls bikonvex und ebenfalls axial entlang des, Strahlengangs verschiebbar, wie durch den Doppelpfeil 16a schematisch dargestellt. Zum Verschieben der Linsen 12, 16 sind an sich bekannte, nicht dargestellte Einrichtungen vorgesehen. Die Bewegbarkeit der Linse 16 aus dem Strahlengang bzw. in den Strahlengang ist schematisch durch den Doppelpfeil 16b dargestellt.

Aufgrund einer Kopplung der Schwenkeinrichtung mit der Leuchtdiode 15 und mit der Strahlungsquelle wird bei einem durch den Kippschalter 7 betätigten Einschwenken der Linse 16 in den Strahlengang automatisch die Leuchtdiode 15 deaktiviert und der Auslesestrahl 10 aktiviert. Bei einem Ausschwenken der Linse 16 aus dem Strahlengang wird entsprechend der Auslesestrahl 10 deaktiviert und die Leuchtdiode 15 aktiviert.

Bei in den Strahlengang geschwenkter zweiter Linse 16 wird die Rekonstruktion des Hologramms 9 durch die Linse 16 und das menschliche Auge 14 auf der Netzhaut des Auges 14 abgebildet. Die zweite Linse 16 bildet dabei die Zwischenrekonstruktion 13 in der in Fig. 4 dargestellten Stellung nach Unendlich ab und das Auge 14 dient als Fouriertransformationslinse. Durch ein Betätigen des Drehrads 8 können die Linsen 12 und 16 relativ zueinander und relativ zu der Ebene des Zwischenbildes 13 axial entlang des Strahlengangs verschoben werden, so dass die Schärfe der Rekonstruktion des Hologramms 9 auf der Netzhaut des Auges 14 durch den Benutzer eingestellt werden kann. Außerdem können wiederum durch einen Austausch der Linsen 12, 16 durch Linsen geeigneter anderer Brennweite die optischen Eigenschaften der Vorrichtung V weiter variiert werden.

Es ist eine nicht näher dargestellte Blende vorgesehen, um das direkt von dem Hologramm 9 reflektierte Laserlicht, also die 0. Beugungsordnung, auszublenden. Auf diese Weise wird der Benutzer der Vorrichtung V bei der Rekonstruktion des Hologramms 9 nicht geblendet und der Konstrast der Rekonstruktion wird verbessert.

Die Vorrichtung V besitzt weiterhin eine Time-Out Funktion, die zur Schonung der Batterie sowie anderer Verschleißteile die Vorrichtung V nach Nichtbenutzung über einen vorgegebenen Zeitraum automatisch abschaltet.

Selbstverständlich ist es bei geeigneter Führung des Auslesestrahls 10 ebenfalls möglich, das Hologramm 9 in Transmission auszulesen.

Ebenfalls ist es möglich, an sich bekannte Einrichtungen vorzusehen, mit Hilfe derer sich die von dem Auslesestrahl 10 bestrahlte Hologrammfläche sowohl hinsichtlich ihrer Größe als auch ihrer Position variieren lässt.

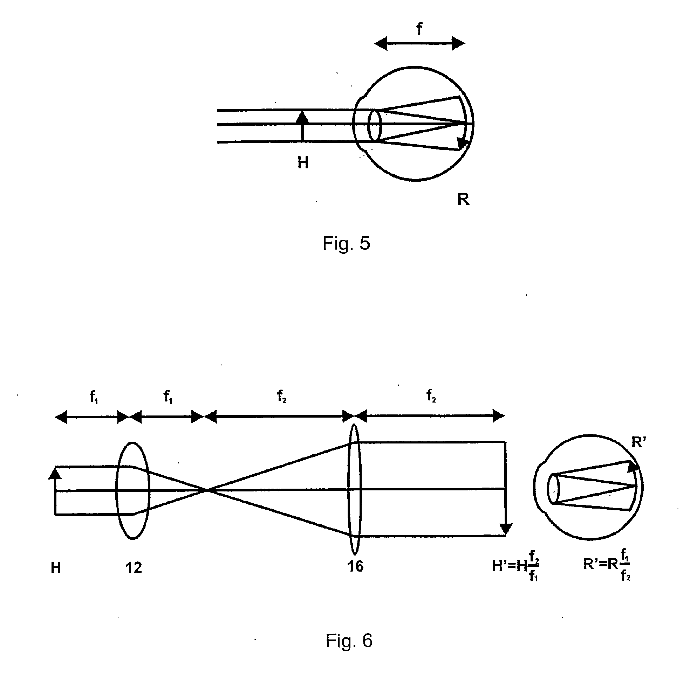

Im Folgenden werden anhand der Fig. 6 bis 11 verschiedene Aufbauten der Optik beschrieben. Zunächst aber wird in Fig. 5 verdeutlicht, wie das menschliche Auge als Fouriertransformationslinse die Rekonstruktion des Hologramms H auf der Netzhaut als R abbildet. Diese Funktion wird in den folgenden Beispielen immer vorausgesetzt und basiert darauf, dass die Rekonstruktion des Hologramms ins Unendliche, also in ein im Wesentlichen paralleles Strahlenbündel abgebildet wird. Die Größe der Rekonstruktion R auf der Netzhaut des Beobachters wird im Folgenden als Referenz verwendet, um eine Vergrößerung oder eine Verkleinerung zu kennzeichnen, die sich aus den verschiedenen Optiken ergeben.

Fig. 6 zeigt den Aufbau entsprechend Fig. 4. Die Brennweiten f₁ der Linse 12 und f₂ der Linse 16 sind als Doppelpfeile eingezeichnet. Die Linsen 12 und 16 sind im Abstand f₁ + f₂ zueinander angeordnet. Mit anderen Worten, ein Brennpunkt der ersten Linse 12 und ein Brennpunkt der zweiten Linse 16 sind in einer gemeinsamen Ebene, der Brennebene beider Linsen angeordnet. Zudem befindet sich das Hologramm H im Abstand f₁ von der ersten Linse 12. Das Hologramm H, also die Punkteverteilung an sich, wird im Abstand f₂ rechts von der Linse 16 als H' abgebildet. Die Größe von H' hängt vom Verhältnis der Brennweiten f_{2/}f₁ sowie von der Größe H ab, wie in Fig. 6 dargestellt ist. Die Größe der Rekonstruktion R' auf der Netzhaut des Auges hängt ebenfalls von den Brennweiten ab, aber in umgekehrter Weise vom Verhältnis f₁/f₂ sowie von der Größe R, wie sich ebenfalls aus der in Fig. 6 dargestellten Formel ergibt.

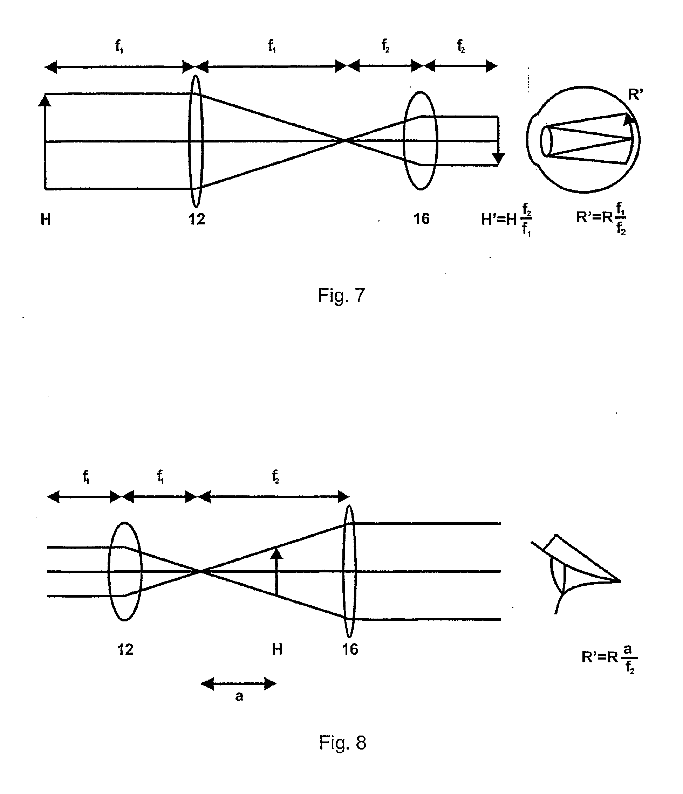

Fig. 7 zeigt den gleichen Aufbau wie Fig. 6, jedoch sind hier die beiden Brennweiten f₂ und f₁ der Linsen 12 und 16 umgekehrt worden. Die Größe H' ist daher von der in Fig. 6 dargestellten Größe H' verschieden, wie sich aus der Formel in Fig. 7 ergibt.

In den Fig. 6 und 7 ist das Hologramm außerhalb der Optik der beiden Linsen 12 und 16 angeordnet.

Fig. 8 zeigt eine nicht von der Erfindung umfasste Anordnung, bei der das Hologramm H zwischen der im Abstand f₂ von der Linse 16 angeordneten Brennebene und der Linse 16 selbst angeordnet ist. Dabei weist das Hologramm einen Abstand a von der Brennebene der Linse 16 auf. Eine Abbildung des Hologramms H in ein Bild H' liegt bei dieser Anordnung nicht vor, jedoch ergibt sich ein sehr kompakter Aufbau der Optik, da das Hologramm H zwischen den Linsen 12 und 16 und nicht außerhalb davon angeordnet ist. Jedoch wird die Verbesserung des Sichtfeldes zur Beobachtung durch ein menschliches Auge wie bei den anderen Beispielen erreicht. Denn die Größe der Rekonstruktion R' wird entsprechend dem Verhältnis aus Abstand a zu Brennweite f₂ der zweiten Linse 16 und entsprechend der Größe R verkleinert. Hier gilt die Formel gemäß Fig. 8.

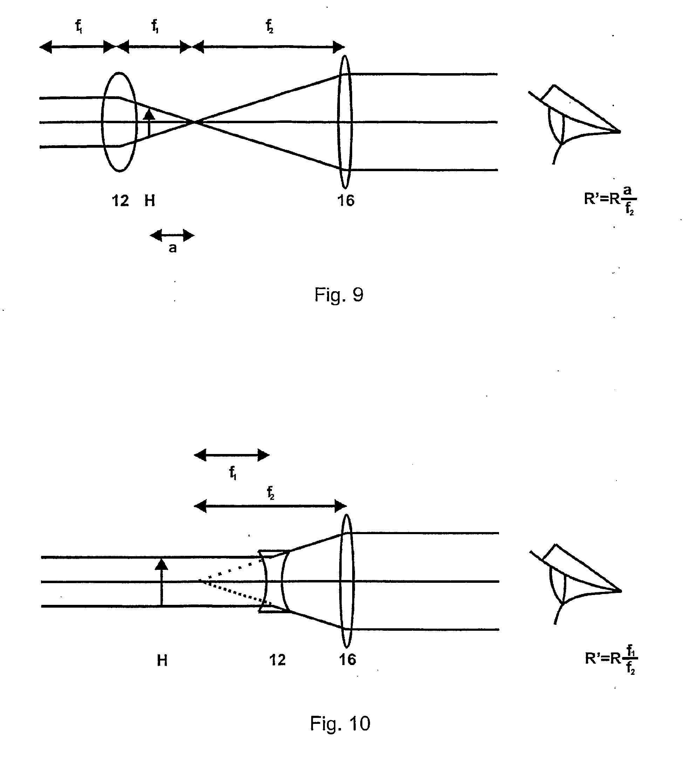

Fig. 9. zeigt eine nicht von der Erfindung umfasste sehr ähnliche Situation, bei der das Hologramm im Abstand a von der im Abstand f₁ von der ersten Linse 12 angeordneten Brennebene und der Linse 12 selbst angeordnet ist. Hierbei ergibt sich der gleiche Effekt wie beim Beispiel gemäß Fig. 8. Denn die Größe der Rekonstruktion R' wird auch hier entsprechend dem Verhältnis aus Abstand a zu Brennweite f₂ der zweiten Linse 16 verkleinert. Hier gilt die Formel gemäß Fig. 9. Die Lupenfunktion durch Ausschwenken der Linse 12 ist hierbei nur beschränkt möglich, da die Linse 16 erst auf das Hologramm H zu bewegt werden muss, bevor eine Vergrößerung erzeugt werden kann.

Die Optiken gemäß den Fig. 6 bis 9 weisen jeweils zwei konvexe Linsen auf.

Fig. 10 zeigt einen Aufbau, bei dem die erste Linse 12 eine konkave Brechungseigenschaften aufweist. Die zweite Linse 16 ist auch hier eine konvexe Linse. Beide Linsen 12 und 16 sind auf der gleichen Seite, in Richtung des Strahlenganges vor den Linsen 12 und 16, in der gemeinsamen Brennebene im Abstand f₁ von der ersten Linse 12 bzw. im Abstand f₂ von der zweiten Linse 16 angeordnet. Die Rekonstruktion R' ergibt sich hierbei aus dem Verhältnis der Brennweiten f₁ und f₂, wobei f₁ kleiner als f₂ ist, somit R' also kleiner als R ist. Siehe hierzu die in Fig. 10 dargestellte Formel. Auch in dieser Anordnung ist eine Lupenfunktion nur dann gegeben, wenn die erste Linse 12 aus dem Strahlengang ausgeschwenkt wird und die Position der zweiten Linse 16 auf das Hologramm zu bewegt wird.

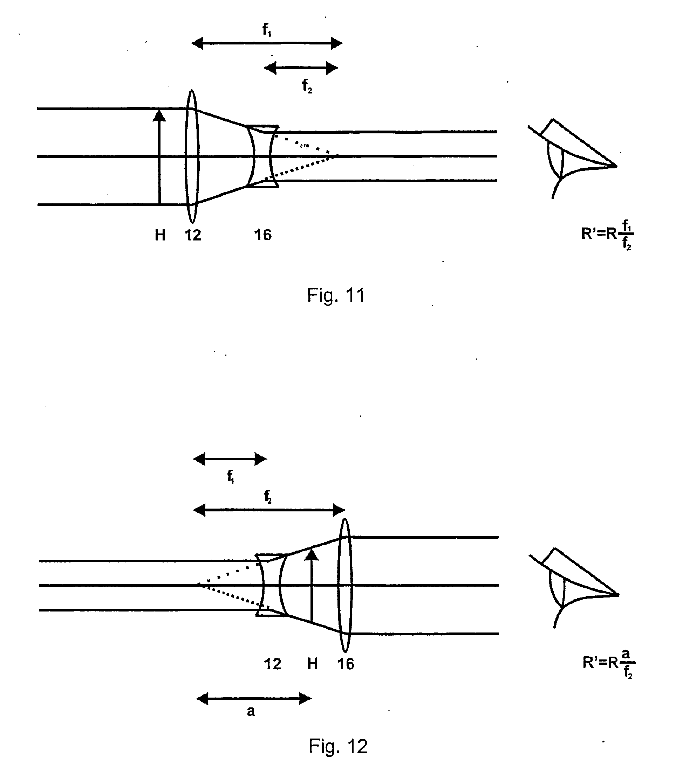

Der Aufbau gemäß Fig. 11 weist eine konvexe erste Linse 12 und eine konkave zweite Linse 16 auf, die so angeordnet sind, dass deren Brennebenen, in Strahlungsrichtung hinter den Linsen 12 und 16, zusammenfallen. Hierbei kommt es aufgrund des Verhältnisses von f₁ zu f₂ zu einer Vergrößerung der Rekonstruktion gegenüber R. Die Lupenfunktion durch die Linse 12 ist auch hierbei nur beschränkt gegeben, da nur ein kurzer Abstand zwischen dem Hologramm und der Linse 12 und damit nur eine geringe Vergrößerung gegeben ist.

In den Fig. 10 und 11 ist das Hologramm außerhalb der Optik der beiden Linsen 12 und 16 angeordnet.

Fig. 12 zeigt einen nicht von der Erfindung umfassten Aufbau, bei dem das Hologramm H zwischen den beiden Linsen 12 und 16 angeordnet ist, wobei die erste Linse 12 konkav und die zweite Linse 16 konvex ausgebildet sind und so zueinander angeordnet sind, wie es sich aus Fig. 10 ergibt. Auch hier ergibt sich eine Verkleinerung der Rekonstruktion R im Verhältnis von Abstand a zu Brennweite f₂.

## Patentansprüche

1. Vorrichtung zum Auslesen eines Hologramms (9), insbesondere eines computergenerierten Fouriertransformationshologramms,
- mit einer Strahlungsquelle zum Bestrahlen des Hologramms (9) mit einem Auslesestrahl (10) aus elektromagnetischer Strahlung,
- mit einer Austrittsöffnung (2)zum Aufnehmen eines von dem Hologramm (9) erzeugten Bildes und
- mit einem Halteabschnitt (4) zum Halten der Vorrichtung mit einer Hand,
- wobei die Vorrichtung zum Aufsetzen auf ein das Hologramm tragendes Speichermedium ausgebildet ist,
- wobei eine mindestens zwei Linsen (12,16) aufweisende Optik vorgesehen ist und
- wobei die mindestens zwei Linsen (12,16) aufweisende Optik derart ausgebildet ist, dass eine erste Linse (12) zwischen dem Hologramm (9) und der Austrittsöffnung (2) sowie eine zweite Linse (16) zwischen der ersten Linse (12) und der Austrittsöffnung (2) vorgesehen ist,
**dadurch gekennzeichnet,**
- **dass** die mindestens zwei Linsen (12,16) aufweisende Optik zur Abbildung der Rekonstruktion des Hologramms auf der Netzhaut durch das menschliche Auge als Fouriertransformationslinse ausgebildet ist und
- **dass** jeweils ein Brennpunkt der ersten Linse (12) und ein Brennpunkt der zweiten Linse (16) im Wesentlichen in einer Ebene angeordnet sind.

2. Vorrichtung nach Anspruch 1,
**dadurch gekennzeichnet,**
**dass** die Linsen (12,16) konvex sind.

3. Vorrichtung nach Anspruch 1,
**dadurch gekennzeichnet,**
**dass** eine der Linsen (12,16) konvex und die andere der Linsen (16,12) konkav ist.

4. Vorrichtung nach einem der Ansprüche 1 bis 3,
**dadurch gekennzeichnet,**
**dass** die Brennweiten der Linsen (12, 16) unterschiedlich sind.

5. Vorrichtung nach einem der Ansprüche 1 bis 4,
**dadurch gekennzeichnet,**
**dass** das Hologramm (9) in Strahlrichtung betrachtet vor der Optik angeordnet ist.

6. Vorrichtung nach einem der Ansprüche 1 bis 5,
**dadurch gekennzeichnet,**
**dass** die erste Linse (12) und/oder die zweite Linse (16) entlang des Strahlengangs axial verschiebbar angeordnet sind.

7. Vorrichtung nach einem der Ansprüche 1 bis 6,
**dadurch gekennzeichnet,**
**dass** eine Einrichtung zum Bewegen, insbesondere durch Schwenken, einer der Linsen (12,16) aus dem Strahlengang und in den Strahlengang vorgesehen ist.

8. Vorrichtung nach Anspruch 7,
**dadurch gekennzeichnet,**
**dass** eine Beleuchtungseinrichtung (15) zum Beleuchten des Hologramms (9) vorgesehen ist.

9. Vorrichtung nach Anspruch 7 oder 8,
**dadurch gekennzeichnet,**
**dass** die Einrichtung zum Bewegen einer der Linsen (12,16) und die Beleuchtungseinrichtung (15) miteinander gekoppelt sind.

10. Vorrichtung nach einem der Ansprüche 7 bis 9,
**dadurch gekennzeichnet,**
**dass** die Einrichtung zum Bewegen einer der Linsen (12,16) und die Strahlungsquelle miteinander gekoppelt sind.

11. Vorrichtung nach einem der Ansprüche 1 bis 10,
**dadurch gekennzeichnet,**
**dass** der Auslesestrahl (10) ein Laserstrahl ist.

12. Vorrichtung nach einem der Ansprüche 1 bis 11,
**dadurch gekennzeichnet,**
**dass** eine Abschattungseinrichtung, insbesondere eine Blende, zur Abschattung des direkt von dem Hologramm (9) reflektierten Auslesestrahls (10) vorgesehen ist.

13. Vorrichtung nach einem der Ansprüche 1 bis 12,
**dadurch gekennzeichnet,**
**dass** die Austrittsöffnung (2) eine Abschattungseinrichtung, insbesondere eine an das menschliche Auge angepasste Tülle (3), zur Abschattung von Störlicht aufweist.

14. Vorrichtung nach einem der Ansprüche 1 bis 13,
**dadurch gekennzeichnet,**
**dass** mindestens eine Positioniereinrichtung zum Positionieren der Vorrichtung (V) in Bezug auf das Hologramm (9) vorgesehen ist.

15. Vorrichtung nach einem der Ansprüche 1 bis 14,
**dadurch gekennzeichnet,**
**dass** eine Einrichtung zum Einstellen der Größe der durch den Auslesestrahl (10) bestrahlten Fläche des Hologramms (9) vorgesehen ist.

16. Vorrichtung nach einem der Ansprüche 1 bis 15,
**dadurch gekennzeichnet,**
**dass** eine Einrichtung zum Positionieren der durch den Auslesestrahl (10) bestrahlten Fläche des Hologramms (9) vorgesehen ist.

17. Vorrichtung nach einem der Ansprüche 1 bis 16,
**dadurch gekennzeichnet,**
**dass** eine Einrichtung zum Einstellen der Strahlleistung des Auslesestrahls (10) vorgesehen ist.

## Claims

1. Apparatus for reading a hologram (9), in particular a computer-generated Fourier transformation hologram,
- having a radiation source for irradiation of the hologram (9) with a read beam (10) composed of electromagnetic radiation,
- having an outlet opening (2) for recording an image which is produced from the hologram (9), and
- having a holding section (4) for holding the apparatus with one hand,
- with the apparatus being designed to be placed onto a storage medium which supports the hologram,
- with optics having at least two lenses (12, 16) being provided and
- with the optics which have at least two lenses (12, 16) being designed such that a first lens (12) is provided between the hologram (9) and the outlet opening (2), and a second lens (16) is provided between the first lens (12) and the outlet opening (2),
**characterized**
- **in that** the optics which have at least two lenses (12, 16) for the imaging of the reconstruction of the hologram on the retina through the human eye are constructed as a Fourier transformation lens, and
- **in that** a focal point of the first lens (12) and a focal point of the second lens (16) are each arranged essentially on one plane.

2. Apparatus according to Claim 1, **characterized in that** the lenses (12, 16) are convex.

3. Apparatus according to Claim 1, **characterized in that** one of the lenses (12, 16) is convex, and the other of the lenses (16, 12) is concave.

4. Apparatus according to one of Claims 1 to 3, **characterized in that** the focal lengths of the lenses (12, 16) are different.

5. Apparatus according to one of Claims 1 to 4, **characterized in that** the hologram (9) is arranged in front of the optics, seen in the beam direction.

6. Apparatus according to one of Claims 1 to 5, **characterized in that** the first lens (12) and/or the second lens (16) are/is arranged such that they/it can be moved axially along the beam path.

7. Apparatus according to one of Claims 1 to 6, **characterized in that** a device is provided for movement, in particular by pivoting, of one of the lenses (12, 16) out of the beam path and into the beam path.

8. Apparatus according to Claim 7, **characterized in that** an illumination device (15) is provided for illumination of the hologram (9).

9. Apparatus according to Claim 7 or 8, **characterized in that** the device for movement of one of the lenses (12, 16) and the illumination device (15) are coupled to one another.

10. Apparatus according to one of Claims 7 to 9, **characterized in that** the device for movement of one of the lenses (12, 16) and the radiation source are coupled to one another.

11. Apparatus according to one of Claims 1 to 10, **characterized in that** the read beam (10) is a laser beam.

12. Apparatus according to one of Claims 1 to 11, **characterized in that** a shadowing device, in particular a shutter, is provided for shadowing of the read beam (10) which is reflected directly by the hologram (9).

13. Apparatus according to one of Claims 1 to 12, **characterized in that** the outlet opening (2) has a shadowing device, in particular a hood (3) matched to the human eye, for shadowing of interference light.

14. Apparatus according to one of Claims 1 to 13, **characterized in that** at least one positioning device is provided for positioning of the apparatus (V) with respect to the hologram (9).

15. Apparatus according to one of Claims 1 to 14, **characterized in that** a device is provided for adjustment of the size of the area of the hologram (9) which is irradiated by the read beam (10).

16. Apparatus according to one of Claims 1 to 15, **characterized in that** a device is provided for positioning of that area of the hologram (9) which is irradiated by the read beam (10).

17. Apparatus according to one of Claims 1 to 16 **characterized in that** a device is provided for adjustment of the beam power of the read beam (10) .

## Revendications

1. Dispositif pour lire un hologramme (9), notamment un hologramme de transformation de Fourier généré par ordinateur,
- avec une source de rayonnement pour irradier l'hologramme (9) avec un faisceau de balayage (10) provenant d'un rayonnement électromagnétique ;
- avec une ouverture de sortie (2) pour recevoir une image générée par l'hologramme (9) ; et
- avec un segment d'arrêt (4) pour arrêter le dispositif d'une main ;
- le dispositif étant réalisé pour être placé sur un support mémoire contenant l'hologramme ;
- un système optique comportant au moins deux lentilles (12, 16) étant prévu ; et
- le système optique comportant au moins deux lentilles (12, 16) étant réalisé de telle sorte qu'une première lentille (12) est prévue entre l'hologramme (9) et l'ouverture de sortie (2) et qu'une deuxième lentille (16) est prévue entre la première lentille (12) et l'ouverture de sortie (2) ;
**caractérisé en ce que** :
- le système optique comportant au moins deux lentilles (12, 16) est réalisé sous la forme d'une lentille de transformation de Fourier pour permettre la reconstitution de l'hologramme sur la rétine par l'oeil humain ; et
- un foyer de la première lentille (12) et un foyer de la deuxième lentille (16) sont respectivement disposés pour l'essentiel dans un plan.

2. Dispositif selon la revendication 1, **caractérisé en ce que** les lentilles (12, 16) sont convexes.

3. Dispositif selon la revendication 1, **caractérisé en ce qu'**une des lentilles (12, 16) est convexe et que l'autre des lentilles (16, 12) est concave.

4. Dispositif selon l'une quelconque des revendications 1 à 3, **caractérisé en ce que** les largeurs focales des lentilles (12, 16) sont différentes.

5. Dispositif selon l'une quelconque des revendications 1 à 4, **caractérisé en ce que** l'hologramme (9) est disposé dans la direction de rayonnement lorsque l'on regarde l'avant du système optique.

6. Dispositif selon l'une quelconque des revendications 1 à 5, **caractérisé en ce que** la première lentille (12) et/ou la deuxième lentille (16) sont disposées le long du chemin du faisceau de façon à pouvoir être décalées dans le plan axial.

7. Dispositif selon l'une quelconque des revendications 1 à 6, **caractérisé en ce qu'**un dispositif est prévu pour déplacer, notamment pivoter, une des lentilles (12, 16) hors du chemin du faisceau et dans le chemin du faisceau.

8. Dispositif selon la revendication 7, **caractérisé en ce qu'**un dispositif d'éclairage (15) est prévu pour éclairer l'hologramme (9).

9. Dispositif selon la revendication 7 ou 8, **caractérisé en ce que** le dispositif de déplacement d'une des lentilles (12, 16) et le dispositif d'éclairage (15) sont couplés l'un à l'autre.

10. Dispositif selon l'une quelconque des revendications 7 à 9, **caractérisé en ce que** le dispositif de déplacement d'une des lentilles (12, 16) et la source de rayonnement sont couplés l'un à l'autre.

11. Dispositif selon l'une quelconque des revendications 1 à 10, **caractérisé en ce que** le faisceau de balayage (10) est un faisceau laser.

12. Dispositif selon l'une quelconque des revendications 1 à 11, **caractérisé en ce qu'**un dispositif d'ombrage, notamment un cache, est prévu pour l'ombrage du faisceau de balayage (10) directement réfléchi par l'hologramme (9).

13. Dispositif selon l'une quelconque des revendications 1 à 12, **caractérisé en ce que** l'ouverture de sortie (2) comporte un dispositif d'ombrage, notamment un bec (3) adapté à l'oeil humain pour l'ombrage de la lumière parasite.

14. Dispositif selon l'une quelconque des revendications 1 à 13, **caractérisé en ce qu'**au moins un dispositif de positionnement est prévu pour le positionnement du dispositif (V) par rapport à l'hologramme (9).

15. Dispositif selon l'une quelconque des revendications 1 à 14, **caractérisé en ce qu'**un dispositif est prévu pour régler la taille de la surface de l'hologramme (9) irradiée par le faisceau de balayage (10).

16. Dispositif selon l'une quelconque des revendications 1 à 15, **caractérisé en ce qu'**un dispositif est prévu pour le positionnement de la surface de l'hologramme (9) irradiée par le faisceau de balayage (10).

17. Dispositif selon l'une quelconque des revendications 1 à 16, **caractérisé en ce qu'**un dispositif est prévu pour le réglage de la puissance du faisceau de balayage (10).
